# EUROPEAN PATENT APPLICATION

(11) **EP 2 015 527 A1**
(43) Date of publication of application: **14.01.2009**
(21) Application number: 08012513.1
(22) Date of filing: 10.07.2008
(51) Int. Cl.: H04L 12/56

(54) **A system and method for adaptive wireless transmission**

(30) Priority: 10.07.2007 US 948720 P
(71) Applicant: WiNetworks Inc., 46733 Herzeliya (IL)
(72) Inventor: Harpak, Ofer, Kiryat Tivon 36520 (IL); Levanda, Matty, Ramat-Gan 52472 (IL); Idan, Ofer, Holon 58834 (IL)
(74) Representative: Grünecker, Kinkeldey, Stockmair & Schwanhäusser Anwaltssozietät

(57) **Abstract**

A wireless transceiver for transmitting information over a wireless network, the wireless transceiver includes: a receiver adapted to receive video packets and video packets priority information indicative of priorities of the video packets; a video queue; a controller, adapted to drop video packets in response to multiple drop parameters that comprise: a temporal status of a wireless link between the wireless transceiver and another wireless transceiver, the video packet priority information, and video queue status; and a transmitter adapted to transmit to the other wireless transceiver un-dropped media video packets.

## Description

### RELATED APPLICATION

The application claims priority of U.S. provisional patent serial number 60/948720, filing date July 10 2007 which is incorporated herein by reference.

### FIELD OF THE INVENTION

The present invention relates to a system and a method for adaptive wireless transmission and especially for a system and method for wireless transmission that is responsive to dynamic changes in a temporal status of a wireless link.

### BACKGROUND OF THE INVENTION

Packets sent over a network are dropped due to congestion and due to transmission errors. Traditionally, the dropping of packets at the congestion points (such as routers, switches and base-stations) is done per-flow. The arbiter, such as policer (entity that drops packets according to the ingress traffic parameters), scheduler (drops packets according to the egress traffic parameters), shaper (shapes the packet streams so that the policer in the next hope does not discard them), and re-transmitter, does not distinguish between packets that belong to the same flow.

Some applications, however, such as video, are influenced differently from the dropping of different packets. That is, some packets are more important to the receiving side than other packets. For these applications, a packet dropping that is unaware of the packet importance results in a 'knee' like behavior. Small number of packet lost degrades significantly the user experience. It is desirable to add a content-aware traffic management that can introduce controlled graceful degradation in the user experience

A progress in this direction has been done in the video standardization groups (e.g., Moving Picture Experts Group - MPEG and Joint Video Team - JVT), with the most recent standard being the Scalable Video Coding (SVC) amendment to ISO/IEC 14496 Part 10. This standard encodes the video into layers of reduced significant in three dimensions (quality, frame rate, resolution). The layer structure enables the introduction of Media Aware Network Elements (MANE) that can discard packets based on their affect on the user experience. The MANE can change the stream sent to each endpoint according to the available bandwidth, user device, actual window size used, and so on. MANE can work with both unicast and multicast streams. MANE functionality and definition is provided in RFC3894 "RTP Payload Format for H.264 Video" and in RFC draft "RTP Payload Format for SVC Video".

The integration of a MANE in a wireless network is not straightforward. So far, many of the applications discussed neglected the unique characteristics of the wireless link.

Wireless link characteristics such as link budget, interference, number of active users, frequency response, and multi-path can rapidly change. These changes can be contributed to a rapid movement of objects and wireless transceivers. These rapid changes can cause a loss of transmitted information resulting in system capacity loss. The capacity loss can be minimized by fast adjustment of the video transmission rate.

Another source of rapid changes in the traffic management decision making is the desire to use multi-user diversity that takes advantage on the statistical nature of users' link conditions. Thus, providing priority to users whose link conditions are expected to worsen soon, and lower priority to users whose link conditions are expected to get better soon.

Nowadays methods and mechanisms used for Video rate adaptation involve client (e.g., video player) and server communication. This communication introduces delay in the rate-adaptation loop that is not short compared with the wireless link changes. Hence rate adaptation cannot closely follow the wireless link status. The prior art strategy (used by most operators these days), to avoid capacity loss, is to reduce the video rate and quality considerably so that the wireless link is able to transfer the video at almost all times. This results in poor user experience.

Another implication of the prior art mechanisms is the use of large queue on the client side (few seconds size is common). This queue provides the video server enough time to retransmit lost packets. That is, a few packets that would normally result in significant reduction of the user experience, can be retransmitted and improve the user experience. This queuing is not acceptable in interactive application like TV-channel-zapping, interactive-games, and control from-a-distance over cameras and such.

There is a growing need to provide efficient methods and systems for video conferencing, video streaming and video transmission over a wireless link.

### SUMMARY OF THE PRESENT INVENTION

The present invention provides a method and a system as described in the accompanying claims. Specific embodiments of the invention are set forth in the dependent claims. These and other aspects of the invention will be apparent from and elucidated with reference to the embodiments described hereinafter.

A method for transmitting information over a wireless network, the method includes: receiving, by a wireless transmitter, video packets and video packets priority information indicative of the priorities of the video packets; dropping video packets in response to multiple drop parameters that comprise: a temporal status of a wireless link between the wireless transmitter and a wireless receiver, the video packet priority information, and video queue status; and transmitting to the wireless receiver un-dropped media video packets.

The method can include: defining multiple video queue fullness thresholds that are associated with multiple video packet priority levels and are responsive to the temporal status of the wireless link; and determining whether to drop a video packet of a certain video packet priority in response to a video queue fullness threshold associated with the certain video packet priority.

The method can include dropping all video packets of the certain video packet priority level of the group regardless of changes in at least one drop parameter during the receiving of the group.

The method can include dropping the group of video packets if at least one video packet of the group is stored in the video queue for a period that exceeds an aging threshold.

The method can include requesting to receive an amount of video packets that exceeds an amount of video packets transferable over the wireless link.

The method can include receiving a request from the second wireless transceiver to receive a certain amount of video packets and amending the request so as to provide an amended request for receiving an amount of video packets that exceeds the certain amount.

The wireless transmitter can be included in a Wi-Max compliant base station and the wireless receiver is included in a Wi-Max compliant subscriber station.

Conveniently, a group of video packets comprises video packets of different priorities, and the method includes determining whether to drop an entire group.

Conveniently, a group of video packets comprises video packets of different video packet priorities, and the method includes determining whether to drop all video packets of a certain video packet priority level.

A wireless transceiver that includes: a receiver adapted to receive video packets and video packets priority information indicative of priorities of the video packets; a video queue; a controller, adapted to drop video packets in response to multiple drop parameters that comprise: a temporal status of a wireless link between the wireless transceiver and another wireless transceiver, the video packet priority information, and video queue status; and a wireless transmitter adapted to transmit to the wireless receiver un-dropped media video packets.

The controller can be adapted to define multiple video queue fullness thresholds that are associated with multiple video packet priority levels and are responsive to the temporal status of the wireless link; and determine whether to drop a video packet of a certain video packet priority in response to a video queue fullness threshold associated with the certain video packet priority.

The group of video packets can include video packets of different priorities, and the controller can be adapted to determine whether to drop an entire group.

The group of video packets can include video packets of different video packet priorities, wherein the controller is adapted to determine whether to drop all video packets of a certain video packet priority level.

The controller can be adapted to determine to drop all video packets of the certain video packet priority level of the group regardless of changes in at least one drop parameter during the receiving of the group.

The controller can be adapted to determine to drop the group of video packets if at least one video packet of the group is stored in the video queue for a period that exceeds an aging threshold.

The wireless transceiver can request to receive an amount of video packets that exceeds an amount of video packets transferable over the wireless link.

The wireless transceiver can receive a request from the second wireless transceiver to receive a certain amount of video packets and to amend the request so as to provide an amended request for receiving an amount of video packets that exceeds the certain amount.

The wireless transceiver can be a Wi-Max compliant base station.

Conveniently, the group of video packets conveys a group of pictures.

Conveniently, a drop parameter reflects a user experience parameter.

Conveniently, a drop parameter reflects a packing efficiency of video packets in a wireless link frame.

Conveniently, a drop parameter reflects video frame portions that were already transmitted to the second transceiver.

### BRIEF DESCRIPTION OF THE DRAWINGS

The present invention is illustrated by way of example and is not limited by the accompanying figures, in which like references indicate similar elements. Elements in the figures are illustrated for simplicity and clarity and have not necessarily been drawn to scale.

Figure 1 illustrates multiple wireless transceivers, a video source and their environment according to an embodiment of the invention;

Figure 2 illustrates a video queue and multiple queue fullness thresholds according to an embodiment of the invention;

Figure 3 illustrates a video queue and multiple queue fullness thresholds according to an embodiment of the invention;

Figures 4 illustrates video queues, an arbitrator, input queues, a aging controller, and a re-tray queue according to an embodiment of the invention; and

Figure 5 illustrates a method for transmitting over a wireless link according to an embodiment of the invention.

### DETAILED DESCRIPTION OF PREFERRED EMBODIMENTS

The proposed system, method and computer program product can be used in various scenarios, such as but not limited to the following: (i) the status of the mobile wireless link can change very quickly and that various video traffic management algorithms in use today in base-stations can not respond to these fast changes; or (ii) the base-station does not have enough processing power to do trans-coding or encoding, or (iii) the base station can parse the packet headers and delete the packet if needed; it can also handle the control plane with both the server and the client as needed in the MANE functionality.

The base-station, functioning as MANE, handles the control plane messages in a way that makes the video server to send more packets than needed so the base-station will have the flexibility to drop packets and shape the video streams according to the temporal status of the wireless link.

The decision which packet to forward and at what time can be based on at least one of the following: (i) Quality of service attributes (such as, bandwidth profile agreement, Service level agreement, priority, weight, delay, committed rate, committed burst size, excess rate, excess burst size), (ii) User experience parameters (such as, video screen size, user tolerance to delay, video picture characteristics; user tolerance to various picture degradation types), (iii) Packing efficiency of packets and packet fragments in the wireless frame, and (iv) The parts of the video frame transmitted and the parts of the video frame received by the far-end receiver.

A pre-defined cost function can attach a cost to each packet, based on the parameters detailed above. The cost function is typically determined by the user of the system (e.g., wireless operator) base on the user experience it decides to provide to its customers. Some simple examples are: (i) Assigning zero cost to packets that are delayed in the base-station more than the delay allowed for this video stream. (ii) Assigning zero cost to packets in a video layer and frame as packets that were discard. (iii) Assigning lower priority to high-frame rate packets (temporal scalability) during talking-head shows

Using the cost function, the base-station calculates the cost for each combination of packets that can be forwarding, and chooses the packets to forward according to the lowest cost achievable.

Processing power limitations sometimes dictate less optimal mechanisms. In this case queues with three discarding mechanisms and one forwarding mechanism can be provided. A packet arrived is affiliated (according to its headers) with its service level agreement and flow parameters (such as, source, destination, application, organization affiliation). A queue corresponds to each such set.

A packet can be dropped before it enters a queue (policing) and while it is being in the queue (aging and correspondence mechanism). The policer drops packets based on the incoming packet streams and the fullness of the queues. The aging mechanism discards packets from the queue when it is no longer beneficial to send them due to too long delay. The correspondence mechanism discards packets from the queues that are no longer beneficial for sending, since the other packets needed to decode them was discarded as well. A simple example is the discarding of packet after a lower level layer was discarded. The extraction and forwarding of the packets is done by the scheduler according to priority assigned to queues.

The dropping algorithms can be applied on a video packet basis, on a group of video packet basis or on a sub-group of video packet basis, especially a sub-group of video packets that have the same video packet priority level.

The efficient use of the wireless link and the utilization of the dropping algorithm may require that the number of video packets receive by a wireless transceiver exceeds the number of video packets that can be transmitted over the wireless link.

The dropping algorithm can be applied by a wireless transceiver (also referred to as wireless transmitter) that receives video packets from a video source and transmits un-dropped video packets to a second wireless transmitter (also referred to as wireless receiver) . The second wireless transceiver can send a request from the second wireless transceiver to receive a certain amount of video packets and the wireless transceiver can amend the request so as to provide an amended request for receiving an amount of video packets that exceeds the certain amount.

The video source can send to the wireless transceiver video packets at constant bit rate, at a variable bit rate, can statistical multiplex the video packets, can compress the video packets and the like. It can apply a video packet processing algorithm that is slower that the rate of changes in the wireless link status. It can, for example, determine the temporal bit rate of video streams that include the video packets, it can reduce the size of images, reduce resolution or prefer not to transmit video packets towards the wireless transceiver, can apply scalable video coding algorithms, and the like.

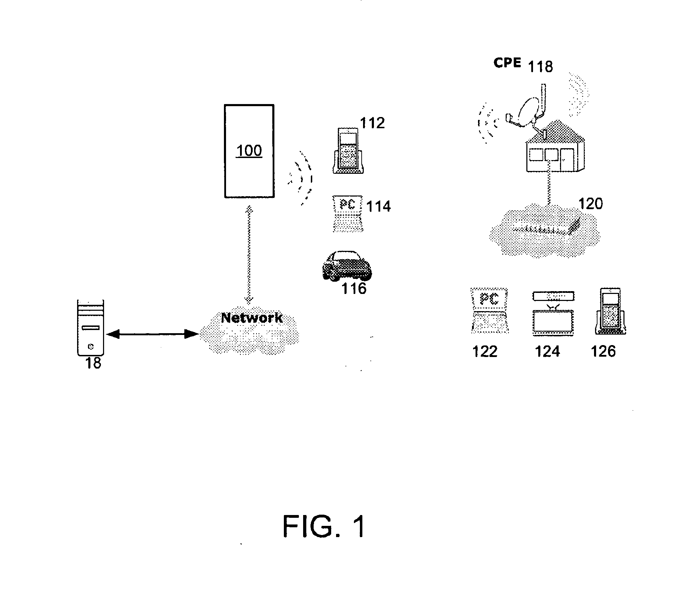

Figure 1 illustrates multiple wireless transceivers 100, 112, 114 and 118, video source 18 and their environment according to an embodiment of the invention.

It is noted that a wireless transceiver that transmits information over a wireless link can be regarded as a wireless transmitter while a wireless transceiver that receiver information over the wireless link can be regarded as a wireless receiver.

Wireless transceiver 100 can be a base-station, such as but not limited to a Wi-Max compliant base station: It can transmit video packets and other information via one or more wireless links to subscriber stations such as mobile phone 112, laptop computer 114, a transceiver that is located within vehicle 116, customer premises equipment (CPE)118 that is connected via home network 120 to various devices 112, 124 and 126.

It is noted that the number and type of wireless transceivers can change from those illustrated in figure 1. Especially, at least one wireless transceiver can be a pico- base station that relays video packets to yet another subscriber unit.

Video source 18 can be a video gateway, a video server, a multiplexing device, a rate-shaping device, a satellite receiver, and the like. It can receive the video packets from video on demand severs, live fees, a headend, a hub, a local video source and the like.

Conveniently, video source 18 is connected to wireless transceiver 100 via a wired or wireless link. This links can be a part of a backbone network, an access network, an urban network, a wide area network, a local area network and the like. This link can convey a larger amount of traffic than the wireless link between wireless transceiver 100 and another wireless transceiver.

Video source 18 can apply the relatively slow quality of service algorithm. This usually requires receiving requests from the recipient (such as CPE 118) of the video packets. These requests can indicate an amount of video packets that can be received by that recipient (for example- increase bit rate request, decrease bit rate request, maintain current bit rate request and the like).

Wireless transceiver 100 needs to receive a larger amount of video packets than it transmits - in order to apply an effective video packet dropping mechanism. In order to receive this larger amount of video packets it requests from video source 18 a larger amount of video packets than that amount that can actually be received by CPE 118. Conveniently, it intercepts control messages exchanged between video source 18 and CPE 118 and changes (or otherwise replaces) the content of these control messages. For example, wireless transceiver 100 can receive a decrease bit rate request from CPE 188 but send to video source a maintain current bit rate request.

Conveniently, wireless transceiver 100 amends these control messages in a transparent manner - so that video source 18 and CPE 118 are not aware of these amendments.

Conveniently, wireless transceiver 100 includes multiple queues. The allocation of queues as well as their number can be predetermined by a user (or administrator) of wireless transceiver 100. A queue is usually allocated per group of packet streams that share the same quality of service levels and handled by the traffic manager as one entity. Some of these queues can be video queues while others can store other types of information or a combination thereof.

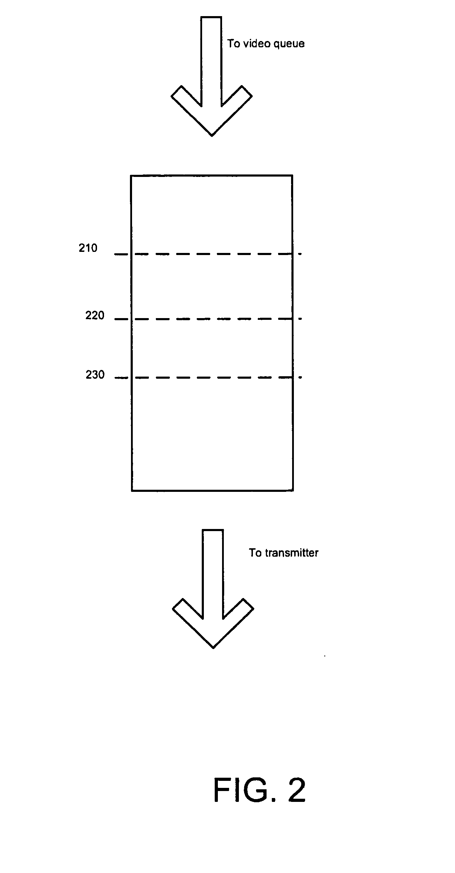

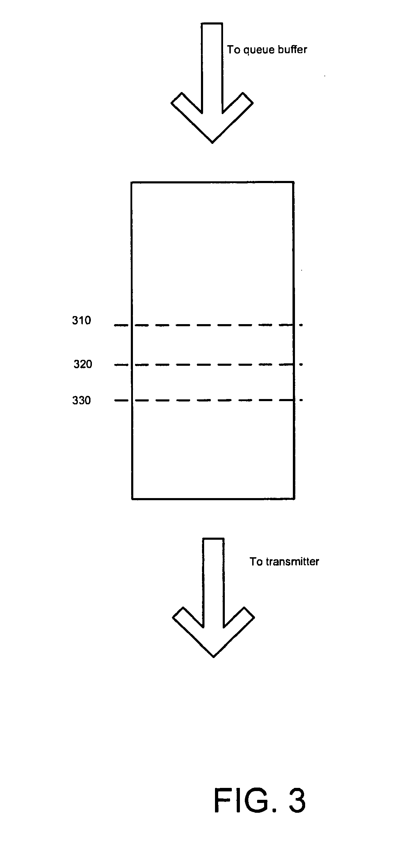

Figures 2 and 3 illustrate a video queue and multiple queue fullness thresholds according to an embodiment of the invention.

Wireless transceiver 100 conveniently applies a traffic management algorithm that is responsive to various dropping parameters. It can set multiple video queue fullness thresholds that are associated with multiple video packet priority levels and with different video encoded layers. The decision to queue or not to queue an arriving packet of a given priority or video encoded layer is affected by the quality of service attributes and by the fullness of the queue relative to the thresholds.

Examples for the use of thresholds are the Weighted Random Early Discard (WRED) designed for TCP traffic and the coloring mechanism in the Metro-Ethernet Forum (MEF) implementation. These cannot, however, be applied successfully to video streaming, video conferencing or interactive applications.

The queue fullness thresholds are conveniently responsive to the temporal status of the wireless link. For example, when the wireless link can convey a larger amount of video packets then wireless transceiver 100 can define higher video buffer fullness thresholds and when the wireless link can convey fewer video packets then wireless transceiver 100 can define lower video buffer fullness thresholds.

Figure 2 illustrates three video queue fullness thresholds 210, 220 and 230 that are determined assuming that the wireless link can convey a large amount of traffic. Figure 3 illustrates three video queue fullness thresholds 310, 320 and 330 that are determined assuming that the wireless link can convey a smaller amount of traffic. Accordingly, video queue fullness threshold 310 is lower than video queue fullness threshold 210, video queue fullness threshold 320 is lower than video queue fullness threshold 220 and video queue fullness threshold 330 is lower than video queue fullness threshold 230.

Video queue fullness thresholds 310 and video queue fullness threshold 210 are utilized when determined whether to drop video packets of a first priority such as video packets that convey I-frames (also referred to as I-packets). These thresholds are also referred to as I-thresholds.

Video queue fullness thresholds 320 and video queue fullness threshold 220 are utilized when determined whether to drop video packets of a second priority such as video packets that convey P-frames (also referred to as P-packets). These thresholds are also referred to as P-thresholds.

Video queue fullness thresholds 330 and video queue fullness threshold 230 are utilized when determined whether to drop video packets of a third priority such as video packets that convey B-frames (also referred to as B-packets). These thresholds are also referred to as B-thresholds.

Conveniently, when determining whether to drop an I-packet the status of the video queue is evaluated in order to determine whether the provision of that I-packet will cause the fullness level of the video queue to exceed the current I-threshold. When determining whether to drop a P-packet the status of the video queue is evaluated in order to determine whether the provision of that P-packet will cause the fullness level of the video queue to exceed the current P-threshold. When determining whether to drop a B-packet the status of the video queue is evaluated in order to determine whether the provision of that B-packet will cause the fullness level of the video queue to exceed the current B-threshold.

According to another embodiment of the invention the determination is responsive to determinations made in relation of other video packets that form a group of video packets.

For example, assuming that I-packets, B-packets and P-packets convey a group of pictures. These packets can be regarded as a group of packets. A decision of whether to drop P-packets (or B-packets) of the group can be made at a certain point in time (for example - before any packet of the group) is dropped or provided to the video queue. This decision can be maintained during a period in which all packets of the group are either dropped or provided to the video queue, regardless of changes in the status of the queue. Conveniently, a decision to drop video packets of the group is maintained while a decision non to drop packets of the group can change.

For example, if wireless transceiver 100 decided to drop all P-packets of a group of packets, then it drops all P-packets of that group even if the state of the video queue has changed to allow the reception of one or more P-packets of the group.

Yet for another example, if wireless transceiver 100 decided to no to drop any P-packet of a group of packets, but the video queue status changes and does not allow the reception of additional P packets that these latter packets will be dropped.

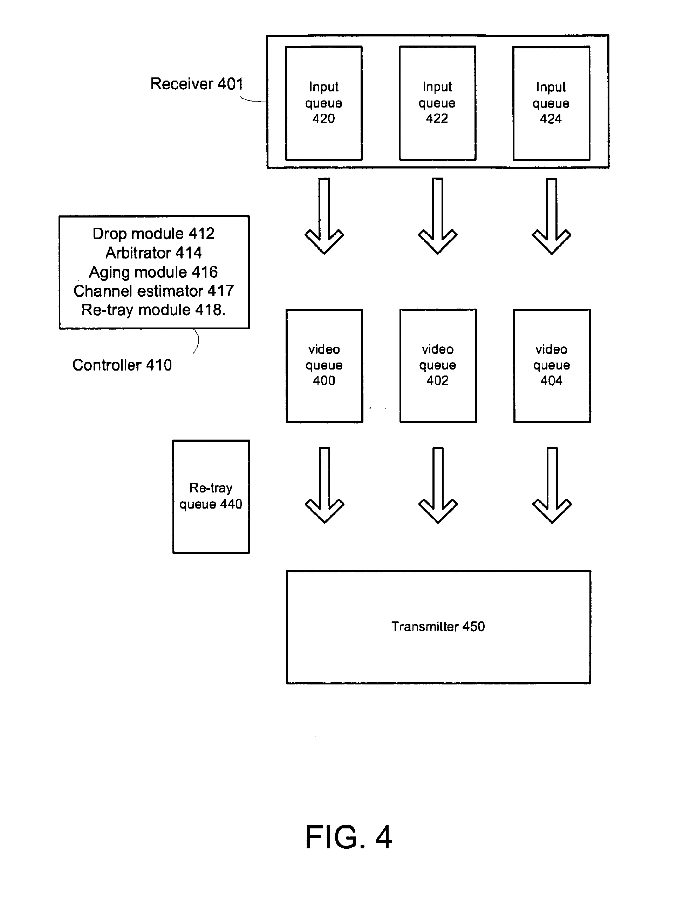

Figure 4 illustrates receiver 401, video queues 400, 402 and 404, controller 410, re-tray queue 440 and transmitter 450, according to an embodiment of the invention.

Controller 410 can include drop module 412, arbitrator 414, aging module 416, channel estimator 417 and re-tray module 418. Receiver 401 can include input queues 420, 422 and 424. It can also receive control messages or other uplink traffic from another wireless transceiver such as CPE 118.

Channel estimator 417 can estimate the status of a wireless link by applying one or more prior art methods, especially by estimating signal to noise, and additionally or alternatively, other wireless link parameters of the wireless link.

Transmitter 450 receives video packets that were selected by arbitrator 414 and transmits them over a wireless link.

Input queues 420, 422 and 424 can be associated with different quality of service levels or with different group of users. Packets from input queue 420 can be sent to video queue 400 or dropped. Packets from input queue 422 can be sent to video queue 402 or dropped. Packets from input queue 424 can be sent to video queue 404 or dropped.

Drop controller 410 determines which video packets to drop and which video packets to provide to a video queue. Drop controller 410 can enforce a video packet dropping policy and thus can be regarded as a policer.

Arbitrator 414 can arbitrate between head of queue video packets (or other video packets) of video queues.

Aging module 416 can apply an aging policy that deletes (from a video queue) or drops (before being provided to the video queue) video packets that are deemed irrelevant due to timing constraints. These timing constraints can limit a period during which a video packet is stored in a video queue or can be responsive to timing information associated with the video packets.

Re-tray module 418 can determine which video packets to re-transmit, which video packets should be sent to re-tray queue 440, which video packets to drop from video re-tray queue 440, when and whether to re-transmit video packets, and the like.

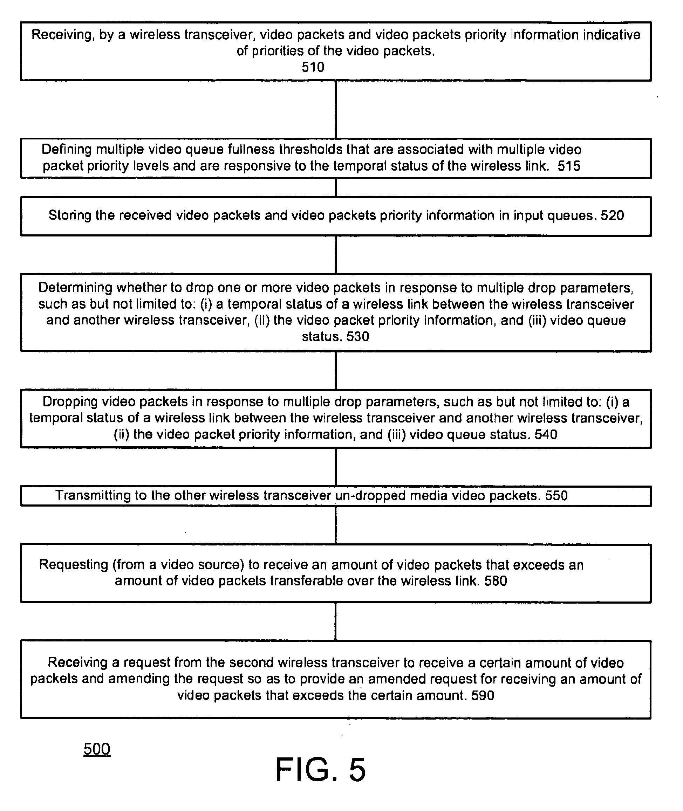

Figure 5 illustrates method 500 for transmitting information over a wireless network, according to an embodiment of the invention.

Method 500 starts by stage 510 of receiving, by a wireless transceiver, video packets and video packets priority information indicative of priorities of the video packets.

Stage 510 is followed by stage 520 of storing the received video packets and video packets priority information in input queues.

Stage 520 is followed by stage 530 of determining whether to drop one or more video packets.

Stage 530 is followed by stage 540 of dropping video packets in response to multiple drop parameters, such as but not limited to: (i) a temporal status of a wireless link between the wireless transceiver and another wireless transceiver, (ii) the video packet priority information, and (iii) video queue status.

Conveniently, one or more drop parameters can reflect at least one of the following: (i) quality of service attributes (such as, bandwidth profile agreement, Service level agreement, priority, weight, delay, committed rate, committed burst size, excess rate, excess burst size), (ii) user experience parameters (such as, video screen size, user tolerance to delay, video picture characteristics, user tolerance to various picture degradation types), (iii)Packing efficiency of packets and packet fragments in the wireless frame, and (iv)parts of a video frame transmitted to the second wireless transceiver and the parts of the video frame received, by the second wireless transceiver.

Stage 540 can include associating a cost with video packets, by applying a predefined cost function, and determining which packets to drop based upon this cost. Accordingly a dropping parameter can be a cost associated with a packet. The cost function can take into account one or more of the mentioned above drop parameters.

Stage 530 is followed by stage 550 of transmitting to the other wireless transceiver un-dropped media video packets.

Stage 550 can include re-transmitting one or more un-dropped video packet.

The re-transmission can include retransmitting some of video packets, part of video packets, and even video packet parity bits.

Conveniently, method 500 includes stage 515 of defining multiple video queue fullness thresholds that are associated with multiple video packet priority levels and are responsive to the temporal status of the wireless link. Stage 515 is preceded by stage 510 and followed by stage 520.

Stage 530 can include determining whether to drop a video packet of a certain video packet priority in response to a video queue fullness threshold associated with the certain video packet priority.

Stage 510 can include receiving a group of video packets that includes video packets of different priorities. In this case stage 530 can include at least one of the following: (i) determining whether to drop an entire group, (ii) determining whether to drop all video packets of a certain video packet priority level.

Stage 540 can include at last one of the following: (i) dropping all video packets of the certain video packet priority level of the group regardless of changes in at least one drop parameter during the receiving of the group; (ii) dropping the group of video packets if at least one video packet of the group is stored in the video queue for a period that exceeds an aging threshold.

Conveniently, stage 510 includes receiving a group of video packets that conveys a group of pictures.

Method 500 can also include at least one of the following stages: (i) stage 580 of requesting (from a video source) to receive an amount of video packets that exceeds an amount of video packets transferable over the wireless link. (ii) Stage 590 of receiving a request from the second wireless transceiver to receive a certain amount of video packets and amending the request so as to provide an amended request for receiving an amount of video packets that exceeds the certain amount.

Because the apparatus implementing the present invention is, for the most part, composed of electronic components and circuits known to those skilled in the art, circuit details will not be explained in any greater extent than that considered necessary as illustrated above, for the understanding and appreciation of the underlying concepts of the present invention and in order not to obfuscate or distract from the teachings of the present invention.

Thus, it is to be understood that the architectures depicted herein are merely exemplary, and that in fact many other architectures can be implemented which achieve the same functionality. In an abstract, but still definite sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality.

Although the invention is described herein with reference to specific embodiments, various modifications and changes can be made without departing from the scope of the present invention as set forth in the claims below.

Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

The term "coupled," as used herein, is not intended to be limited to a direct coupling or a mechanical coupling.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles.

## Claims

1. A method for transmitting information over a wireless network, the method comprising:
receiving, by a wireless transmitter, video packets and video packets priority information indicative of the priorities of the video packets;
dropping video packets in response to multiple drop parameters that comprise: a temporal status of a wireless link between the wireless transmitter and a wireless receiver, the video packet priority information, and video queue status; and
transmitting to the wireless receiver un-dropped media video packets.

2. The method according to claim 1, further comprising:
defining multiple video queue fullness thresholds that are associated with multiple video packet priority levels and are responsive to the temporal status of the wireless link; and
determining whether to drop a video packet of a certain video packet priority in response to a video queue fullness threshold associated with the certain video packet priority.

3. The method according to claim 1 wherein a group of video packets comprises video packets of different priorities, wherein the dropping is preceded by determining whether to drop an entire group, or
all video packets of a certain video packet priority level.

4. The method according to claim 3 comprising dropping all video packets of the certain video packet priority level of the group regardless of changes in at least one drop parameter during the receiving of the group.

5. The method according to any one of claims 1 to 4 comprising requesting to receive an amount of video packets that exceeds an amount of video packets transferable over the wireless link.

6. The method according to any one of claims 1 to 5 comprising receiving a request from the second wireless transceiver to receive a certain amount of video packets and amending the request so as to provide an amended request for receiving an amount of video packets that exceeds the certain amount.

7. The method according to any one of claims 1 to 6 wherein a drop parameter reflects at least one parameter of a user experience parameter,
a packing efficiency of video packets in a wireless link frame;
video frame portions that were already transmitted to the second transceiver.

8. A wireless transceiver, the wireless transceiver comprises:
a receiver adapted to receive video packets and video packets priority information indicative of priorities of the video packets;
a video queue;
a controller, adapted to drop video packets in response to multiple drop parameters that comprise: a temporal status of a wireless link between the wireless transceiver and another wireless transceiver, the video packet priority information, and video queue status; and
a wireless transmitter adapted to transmit to the wireless receiver un-dropped media video packets.

9. The wireless transceiver according to claim 8 wherein the controller is adapted to:
define multiple video queue fullness thresholds that are associated with multiple video packet priority levels and are responsive to the temporal status of the wireless link; and
determine whether to drop a video packet of a certain video packet priority in response to a video queue fullness threshold associated with the certain video packet priority.

10. The wireless transceiver according to claim 8 or 9 wherein a group of video packets comprises video packets of different priorities, wherein the controller is adapted to determine whether to drop an entire group, or to drop all video packets of a certain video packet priority level.

11. The wireless transceiver according to claim 10 wherein the controller is adapted to determine to drop all video packets of the certain video packet priority level of the group regardless of changes in at least one drop parameter during the receiving of the group.

12. The wireless transceiver according to claim 10 wherein the controller is adapted to determine to drop the group of video packets if at least one video packet of the group is stored in the video queue for a period that exceeds an aging threshold.

13. The wireless transceiver according to any one of claims 10 to 12 wherein the group of video packets conveys a group of pictures.

14. The wireless transceiver according to any one of claims 8 to 13 that is a Wi-Max compliant base station.

15. The wireless transceiver according to any one of claims 8 to 14 wherein a drop parameter reflects at least one parameter of a user experience parameter, a packing efficiency of video packets in a wireless link frame, video frame portions that were already transmitted to the second transceiver.
